Europäisches Patentamt

European Patent Office

Office européen des brevets

(11) Publication number: **0 048 553**
**B1**

# EUROPEAN PATENT SPECIFICATION

(45) Date of publication of patent specification: **15.05.85**

(21) Application number: **81303859.3**

(22) Date of filing: **25.08.81**

(51) Int. Cl.⁴: **B 60 K 17/30, F 16 D 3/84,
F 16 J 15/52, F 16 D 3/21**

(54) Seal for wheel bearing and universal joint.

(30) Priority: **13.09.80 GB 8029671**

(43) Date of publication of application:
**31.03.82 Bulletin 82/13**

(45) Publication of the grant of the patent:
**15.05.85 Bulletin 85/20**

(84) Designated Contracting States:
**AT BE DE FR GB IT LU NL SE**

(56) References cited: .
**DE-C- 536 267
FR-A-2 213 438
FR-A-2 380 475
GB-A- 312 760
GB-A- 442 343
GB-A- 826 440**

(73) Proprietor: **GKN Transmissions Limited
P.O. Box 405 Chester Road
Erdington, Birmingham B24 0RB (GB)**

(72) Inventor: **Palmer, Bertram Joseph
26 Captains Lane Barton Under Needwood
Staffordshire DE13 8EZ (GB)**

(74) Representative: **Dodd, Graham Marshall et al
Guest Keen and Nettlefolds plc Group Patents
and Licensing Department P.O. Box 55 Ipsley
House Ipsley Church Lane
Redditch Worcestershire B98 0TL (GB)**

Courier Press, Leamington Spa, England.

## Description

This invention relates to constant velocity universal joint and wheel bearing assemblies for motor vehicles. In particular, this invention relates to an improved sealing means for such an assembly.

It is known in the construction of universal joints to provide a flexible seal for connection to part of the joint outer race and a shaft associated with the joint inner race, to form a sealing enclosure. Upon rotation of the joint, the sealing means has to withstand the dynamic stresses imposed by such rotation. Furthermore, a seal of this type could not be utilized to additionally seal a wheel bearing outer race associated with the joint since relative rotation occurs between the two.

It has been proposed in GB—A—1063932 to provide a non-rotating flexible seal, fixed at one end to a bell shaped inner part of a wheel spindle and at its other end to an annular bearing in running contact with a drive shaft associated with a universal joint inner race.

However, this design of seal utilizes a much greater enclosed volume of lubricant compared to that required in a rotatable joint seal and, furthermore, an independent sealing means is required in order to seal the associated wheel bearing.

It has also been proposed in GB—A—442343 that a bearing and universal joint assembly can be sealed by an arrangement including a rigid annular shroud extending from the outer race of the bearing assembly, covering the universal joint, and a flexible boot fixed to the shroud and to a bearing which runs on a shaft by which the universal joint is driven. However, the arrangement disclosed occupies a considerable space and is not ideally suited for use in modern vehicles where suspension components may restrict the space available in the region of a wheel bearing and universal joint assembly.

It is the object of the present invention to provide a universal joint and wheel bearing assembly which is suitable for use in a confined space typical of modern motor vehicle suspension arrangements.

According to the invention, there is provided an assembly comprising a bearing outer race adapted to be secured to a suspension component or components, a bearing inner race, bearing means rotatably mounting said inner race relative to said outer race, said bearing inner race being adapted to have a wheel secured to it, a constant velocity ratio universal joint, and a rotatable shaft for driving said bearing inner race via said constant velocity ratio universal joint, a rigid annular shroud extending from said bearing outer race substantially along and spaced from, the axial length of said constant velocity ratio universal joint, and a flexible annular boot fixed to said shroud and to a bearing member in running contact with said rotatable shaft, to form an enclosure containing both said bearing means and said universal joint. Such an assembly is disclosed in the above cited GB—A—442343. The invention, however, is characterised in that the flexible annular boot is of a shape, viewed along said shaft in the unarticulated state, having major and minor axes of different dimensions.

By the use of a flexible boot of non-circular configuration, preferably with the major axis (greater dimension) of the boot lying generally horizontally and the minor axis generally vertically, a reduction in the space occupied by the boot is achieved enabling greater freedom in design of suspension components. These and other advantages of the assembly according to the invention are described more fully hereafter.

The invention will now be described by way of example only with reference to the accompanying drawings in which,

Figure 1 shows a part cross-sectional representation of an assembly of the kind specified and

Figure 2 shows a modification to part of the assembly shown in Figure 1.

In the assembly shown in the drawings a wheel bearing outer race 1 has a flange 2 to enable it to be secured to suspension means, not shown. In the interior of wheel bearing outer race 1 is a surface 3 which has running engagement with wheel bearings 4 spaced around a wheel bearing inner race 5 having a bearing surface 6. The wheel bearing inner race 5 is of two-part construction and comprises a wheel flange 7 and the outer race 8 of a constant velocity ratio universal joint 9. On wheel flange 7 are disposed studs 10 which provides for mounting of a conventional brake disc and vehicle wheel. A constant velocity ratio universal joint 9 comprises an outer member 8 and an inner member 11, between the bearing surfaces of which are arranged balls 12 confined within a cage 13 in a conventional manner. The inner member of the constant velocity ratio universal joint 9 is rigidly fixed to a shaft 14 by splines 15 and spring ring 16. A rigid annular shroud 17 locates in an annular recess 18 on wheel bearing outer race 1 and is firmly fixed therein. On a peripheral portion of rigid annular shroud 17, one end of a flexible convoluted boot 19 is fixed by retaining clip 20. The boot 19 extends to a retaining cover 21 of an axially split plastics bearing 22, and is retained thereon by a clip 23. A rotary seal 24 locates in recess 25 at the end of retaining cover 21 and is in running contact with shaft 14. In a similar manner, a rotary seal 26 is located in a retaining cover 27 attached to wheel bearing outer race 1, and is in running contact with wheel flange 7.

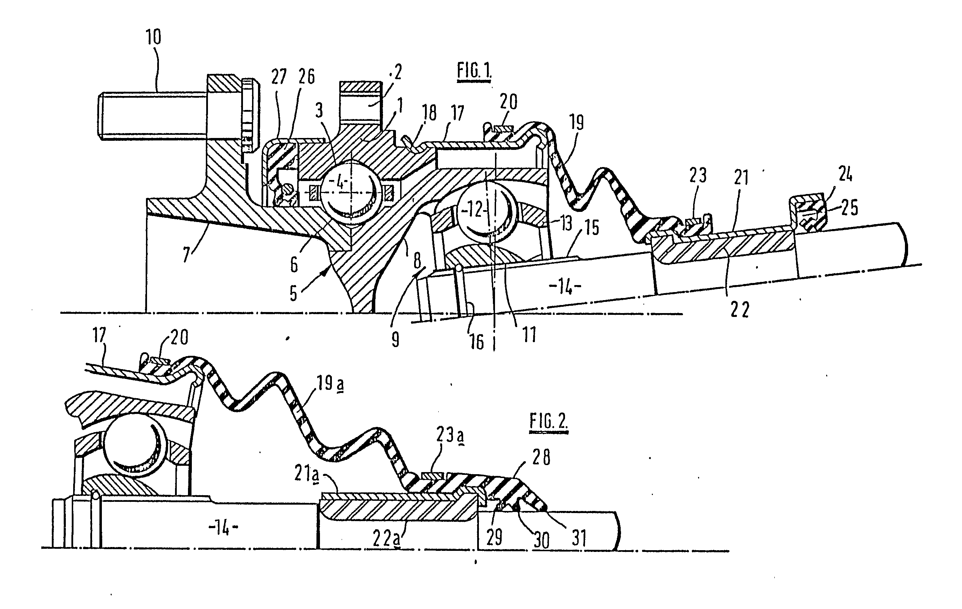

Referring now to Figure 2, parts of this embodiment corresponding to like parts in Figure 1 are designated by the same reference members suffixed with 'a'. A flexible convoluted boot 19a is attached at one end to rigid annular shroud 17 by retaining clip 20. The opposite end of flexible convoluted boot 19a is attached to retaining cover 21a by retaining clip 23a. The retaining cover 21a houses an axially split plastics bearing 22a which surrounds shaft 14 and is in running contact with it. A portion 28 of boot 19a extends beyond retaining cover 21a and is in running contact with an exposed part of shaft 14 at 29, 30 and 31 so as to form a rotary shaft seal.

In operation shaft 14 is drivably connected to wheel flange 7 by constant velocity ratio universal joint 9 and is rotatably supported by wheel bearings 4 running in wheel bearing inner race 5 and wheel bearing outer race 1 connected via flange 2 to suspension means. The rigid annular shroud 17 and flexible convoluted boot 19 define a sealing enclosure for common lubrication, usually by means of a suitable grease, of constant velocity ratio universal joint 9 and wheel bearings 4.

In a preferred method of construction of an assembly of the kind described the outer member 8 of the constant velocity universal joint 9 is permanently joined to wheel flange 7 by electron beam welding, after wheel bearing outer race 1 and wheel bearings 4 have been located in their appropriate positions with respect to wheel bearing inner race 5.

It is to be understood that the rigid annular shroud 17 may form an integral part of wheel bearing outer race 1. In this embodiment a peripheral portion of wheel bearing outer race 1 is suitably shaped such that a conventional convoluted boot as described can be attached to the stationary bearing outer race.

The flexible boot 19 or 19a, is elliptical or oval in shape as viewed axially, thus allowing greater angular flexibility in the plane of the major axis than in the plane of the minor axis. This flexible boot design can be fitted to a vehicle such that the major axis of the convolutions would lie in the horizontal plane, thus providing for increased angular flexibility for wheel steering requirements whilst the minor axis of the convolutions in the vertical plane would accommodate the reduced angular flexibility necessary for suspension movement only. The advantage of such a flexible boot having elliptical or oval convolutions lies in the fact that the size and disposition of vehicle suspension components tends to place a premium on space in the vertical plane and by having the minor axis of the convolutions in this vertical plane a substantial space reduction can be achieved.

Since the flexible boot does not rotate with the shaft, being firmly fixed to the wheel bearing outer race via the annular shroud, it has the advantage in that dynamic stresses within the flexible boot are considerably lower than in a rotating boot. This allows greater freedom in choice of materials and proportioning the convolution shapes and thicknesses whether radially or axially or a combination of both. In addition, the much reduced flexibility requirements compared with a rotating boot allows materials to be used which are more resistant to damage from external sources, whether this be mechanical or thermal in character. Furthermore, the angular flexibility requirements of universal joint boots for steered wheel applications invariably result in contact between adjacent convolutions at high angles and on rotating flexible boots the different diameters of adjacent convolutions can result in rubbing contact, which eventually leads to perforation of one or both of the contacting convolutions. A non-rotating boot design, as described previously, drastically reduces the amount of rubbing between contacting convolutions and hence the life of the boot is enhanced.

In order to accommodate relative movement between the flexible boot and shaft an axially split plastics bearing is interposed between the shaft and boot and each half of the bearing can incorporate a tenon and a dimensionally matching recess. When assembled the outside diameter of the shaft bearing must be larger than the largest diameter on the shaft between the splined end for location of the universal joint and the zone within which the bearing is designed to operate. This feature is necessary to enable a complete retaining cover to be easily assembled over the bearing to hold the two bearing halves together. The retaining cover can be deformed over the enlarged end of the assembled bearing to prevent accidental dis-assembly. Furthermore, the shaft bearing may be located in a groove in the shaft or shaped to locate on an annular collar on the shaft and dimensioned to give a greater or lesser degree of axial freedom relative to the shaft. Alternatively, the bearing may be unrestrained by any feature on the shaft but controlled axially by the sealing boot alone. In this embodiment it is convenient directly to connect the flexible boot to the outside diameter of the bearing, thus eliminating the retaining cover.

There may be provided a seal or other form of divider to separate the lubricants for the universal joint and for the bearing from one another, if different types of lubricant are required for them.

**Claims**

1. An assembly comprising a bearing outer race (1) adapted to be secured to a suspension component or components, a bearing inner race (5), bearing means (4) rotatably mounting said inner race relative to said outer race, said bearing inner race (5) being adapted to have a wheel secured to it, a constant velocity ratio universal joint (9), and a rotatable shaft (14) for driving said bearing inner race (5) via said constant velocity ratio universal joint (9), a rigid annular shroud (17) extending from said bearing outer race (1) substantially along and spaced from, the axial length of said constant velocity ratio universal joint (9), and a flexible annular boot (19 or 19a) fixed to said shroud (17) and to a bearing member (22 or 22a) in running contact with said rotatable shaft (14), to form an enclosure containing both said bearing means (4) and said universal joint (9), characterised in that the flexible annular boot (19 or 19a) is of a shape, viewed along said shaft in the unarticulated state, having major and minor axes of different dimensions.

2. An assembly according to claim 1 further characterised in that said major axis lies generally horizontally and said minor axis generally vertically.

**Patentansprüche**

1. Anordnung mit einem zur Befestigung an einem Aufhängungsteil oder Aufhängungsteilen ausgelegten äußeren Lagerring (1), einem inneren Lagerring (5) und Lagermitteln (4), die den Innenring relativ zu dem Außenring halten, wobei der Innenring (5) so ausgelegt ist, daß ein Rad daran befestigt werden kann, einem Gleichlaufkreuzgelenk (9) und einer drehbaren Welle (14) zum Antrieb des inneren Lagerrings (5) über das Gleichlaufkreuzgelenk (9), einer starren ringförmigen Abschirmung (17), die sich von dem äußeren Lagerring (1) im wesentlichen entlang und in einem Abstand von der axialen Länge des Gleichlaufkreuzgelenks (9) erstreckt und einem elastischen, ringförmigen Faltenbalg (19 oder 19a), der an der Abschirmung (17) und an einem in laufendem Kontakt mit der drehbaren Welle (14) sich befindenden Lagerkörper (22 oder 22a) befestigt ist, um eine die Lagermittel (4) und das Kreuzgelenk (9) enthaltende Umhüllung zu bilden, dadurch gekennzeichnet, daß der elastische ringförmige Faltenbalg (19 oder 19a) eine Form hat, die bei Betrachtung entlang der Welle in ungebeugten Zustand Haupt- und Nebenachsen verschiedener Abmessungen aufweist.

2. Anordnung nach Anspruch 1, dadurch gekennzeichnet, daß die größere Achse sich im allgemeinen in horizontaler und die kleinere Achse sich im allgemeinen in vertikaler Richtung erstreckt.

**Revendications**

1. Ensemble comprenant un chemin de roulement extérieur (1) de palier conçu pour être fixé à un élément ou des éléments de la suspension, un chemin de roulement intérieur (5) de palier, un palier (4) portant de manière rotative ledit chemin de roulement intérieur par rapport audit chemin de roulement extérieur, ledit chemin de roulement intérieur (5) de palier étant destiné à se voir fixer une roue, un joint universel (9) à rapport de vitesse constant, et un arbre rotatif (14) servant à entraîner ledit chemin de roulement intérieur (5) de palier via ledit joint universel (9) à rapport de vitesse constant, une enveloppe annulaire rigide (17) s'étendant depuis ledit chemin de roulement extérieur (1) de palier suivant sensiblement la longueur axiale dudit joint universel (9) à rapport de vitesse constant et étant écartée de celui-ci, et un manchon annulaire souple (19 ou 19a) fixé à ladite enveloppe (17) et à un élément de palier (22 ou 22a) en contact mobile avec ledit arbre rotatif (14), afin de former une enceinte contenant à la fois ledit palier (4) et ledit joint universel (9), caractérisé en ce que le manchon annulaire souple (19 ou 19a) présente une forme, lorsqu'on la voit suivant ledit arbre dans l'état non articulé, telle que les axes majeur et mineur ont des dimensions différentes.

2. Ensemble selon la revendication 1, caractérisé en outre en ce que ledit axe majeur est disposé généralement horizontalement et ledit axe mineur généralement verticalement.

FIG.1

FIG.2